# EUROPEAN PATENT APPLICATION

(11) **EP 1 722 222 A1**
(43) Date of publication of application: **15.11.2006**
(21) Application number: 04792207.5
(22) Date of filing: 08.10.2004
(51) Int. Cl.: G01N 31/00, G01N 30/06, G01N 30/88

(54) **METHOD OF DETERMINING IMPURITY IN ACRYLIC ACID**

(30) Priority: 01.03.2004 JP 2004056070
(71) Applicant: MITSUBISHI CHEMICAL CORPORATION, Tokyo 108-0014 (JP)
(72) Inventor: YADA, Shuhei, C/o Mitsubishi Chemical Corporation, Yokkaichi-shi, Mie 5108530 (JP); TAKASAKI, Kenji, C/o Mitsubishi Chemical Corp., Yokkaichi-shi, Mie 5108530 (JP); SUZUKI, Yoshiro, C/o Mitsubishi Chemical Corp., Yokkaichi-shi, Mie 5108530 (JP); OGAWA, Yasushi, C/o Mitsubishi Chemical Corporat., Yokkaichi-shi, Mie 5108530 (JP)
(74) Representative: HOFFMANN EITLE
(86) International application number: PCT/JP2004/014938
(87) International publication number: WO 2005/083421

(57) **Abstract**

The present invention provides a method of quantitatively analyzing a trace amount of impurities such as furfural and benzaldehyde present in high purity acrylic acid with higher accuracy by using a conventionally used general-purpose analyzer and analysis conditions. In the present invention, a crystallized acrylic acid product and a mother liquor are obtained from liquid acrylic acid, and one of impurities in the mother liquor is quantitatively determined. Then, an amount of the impurity in the liquid acrylic acid is determined based on the determined amount of the impurity in the mother liquor and a ratio of impurity distributed to a mother liquor and to crystallized solid acrylic acid when acrylic acid is crystallized in a certain ratio.

## Description

### Technical Field

The present invention relates to a method for quantifying an amount of an impurity in high purity acrylic acid. The present invention more specifically relates to a method for quantifying an amount of a trace amount of an impurity in high purity acrylic acid purified from an acrylic acid solution obtained through a vapor-phase catalytic oxidation reaction of propane, propylene, or acrolein.

### Background Art

Acrylic acid is industrially important as a raw material for super absorbent polymers and as a raw material for various acrylates. An application of acrylic acid as a monomer for polymerization represented by the raw material for super absorbent polymers has recently demanded very high purity acrylic acid in accordance with applications or functions of the polymers to be formed. Thus, various advanced purification techniques for acrylic acid are developed and industrially implemented.

Examples of such techniques include: a method involving reacting on aldehydes such as furfural and benzaldehyde in acrylic acid using alkyl mercaptan and an acid catalyst and separating the aldehydes through distillation (see JP 2003-002012 A, for example); a method involving reducing furfural or benzaldehyde by separation through distillation at 100° C or lower in the presence of a hydrazine compound and copper dithiocarbamate (see JP 07-228548 A, for example); and a method involving reducing maleic anhydride in crude acrylic acid by distilling the crude acrylic acid in the presence of hydrazine and ammonia (see JP 10-087552 A, for example).

A concentration of an impurity such as furfural and benzaldehyde in acrylic acid subjected to the advanced purification is drastically reduced. As a result, quantitative analysis of the impurity requires quantitative analysis at a level below several mass ppm or below 1 mass ppm.

Quantitative analysis of an impurity in acrylic acid is conventionally conducted by using gas chromatography. In such quantitative analysis, a sample of acrylic acid purified through distillation is injected into a column as it is or as a sample diluted with an appropriate solvent. However, in such quantitative analysis, a detection limit of the impurity is about 5 mass ppm. Setting of a very special analysis column or very special analysis conditions can reduce the detection limit to about 1 mass ppm, but such an analyzer is not preferable because the analyzer will be monopolized as an exclusive analyzer.

### Disclosure of the Invention

An object of the present invention is to provide a method of quantitatively analyzing a trace amount of an impurity such as furfural and benzaldehyde present in high purity acrylic acid with higher accuracy by using a conventionally used general-purpose analyzer and analysis conditions.

The inventors of the present invention have conducted various studies for solving the above problems, and have found that a distribution factor of an impurity to a crystallized product (crystallized acrylic acid) and to a mother liquor is determined in accordance with a crystallization factor and in accordance with each of impurities when acrylic acid is crystallized from high purity acrylic acid containing a trace amount of the impurities. The term "crystallization factor" refers to a ratio of an amount of the crystallized product to an amount of the high purity acrylic acid. The term "distribution factor" refers to a ratio of an amount of an impurity in the crystallized product or of an amount of the impurity in the mother liquor to an amount of the impurity in the high purity acrylic acid.

Further, the inventors of the present invention have found: that high purity acrylic acid can be crystallized in a very short period of time; that a trace amount of impurities therein is extracted in the mother liquor in a high concentration; and that a relationship between the distribution of an impurity into a crystal of acrylic acid and to a mother liquor and the ratio of the crystallization of acrylic acid has very good reproducibility in accordance with each of the impurities. Thus, the inventors of the present invention have completed the present invention.

That is, the gist of the present invention is described below.
1. A method for quantifying an amount of an impurity in acrylic acid, including: a crystallization step for obtaining a crystallized acrylic acid product and a mother liquor from liquid acrylic acid; a step of quantitatively determining the one of impurities in the mother liquor; and a step of determining an amount of the impurity in the liquid acrylic acid based on the determined amount of the impurity in the mother liquor and a ratio of the impurity distributed to a mother liquor and to crystallized solid acrylic acid when acrylic acid is crystallized in a certain ratio.
2. The method according to the above item 1, in which 70.0 mass% to 99.5 mass% of acrylic acid is crystallized with respect to a mass of the liquid acrylic acid in the crystallization step.
3. The method according to the above item 1, in which one of impurities is quantitatively determined by using gas chromatography in the step of quantitatively determining.
4. The method according to the above item 1, in which a calibration curve prepared in advance is used in the step of determining an amount of the impurity.

### Best Mode for carrying out the Invention

Hereinafter, the present invention will be described in more detail. The present invention relates to a method for quantifying an amount of an impurity in liquid acrylic acid (hereinafter, may also be referred to as "high purity acrylic acid").

### <Production process for high purity acrylic acid>

Acrylic acid produced through a known method can be used for high purity acrylic acid which becomes an object of the present invention. For example, a method for producing such acrylic acid includes: an oxidation step involving a vapor-phase catalytic oxidation reaction of propane, propylene, or acrolein as a starting material; a collecting step for collecting an acrylic acid-containing gas from the oxidation step as an acrylic acid solution by bringing the gas into contact with an absorption solvent; a step of separating acrylic acid and water from the acrylic acid solution through distillation using an appropriate azeotropic solvent; a step of separating low boiling point impurities such as acetic acid from acrylic acid through distillation; a step of separating high boiling point impurities through distillation; and a step of producing high purity acrylic acid by reducing a concentration of impurities such as furfural, benzaldehyde, and maleic anhydride.

Further, the method for producing acrylic acid may further include other methods recently carried out which employ, replacing part of the step of separating through distillation in the above-mentioned method for producing with: a step of separating low boiling point impurities such as water and acetic acid and a solvent from acrylic acid at once through azeotropic distillation; or a step of extracting acrylic acid from water using an extraction solvent such as methyl isobutyl ketone, isopropyl acetate, methyl ethyl ketone, or toluene and separating the extraction solvent and remaining water from the extracted acrylic acid.

Water or a condensate of an acrylic acid-containing gas is usually used as the absorption solvent, but an organic solvent such as methyl isobutyl ketone described above may also be used. Further, an azeotropic solvent used in the step of separating through azeotropic distillation is selected from a solvent forming an azeotropic mixture by boiling together with water or with water and acetic acid. Examples of the solvent boiling together with water include normal butyl acetate, isobutyl acetate, isopropyl acetate, and methyl isobutyl ketone. Examples of the solvent boiling together with water and acetic acid include toluene, heptane, cyclohexane, and diisobutyl ether.

When a plurality of the absorption solvent, the azeotropic solvent, the extraction solvent, and the like are used, the same solvent system is preferably used because a process is not complicated.

### <Impurities in acrylic acid as analysis target>

Examples of impurities in acrylic acid produced through the method for producing include formaldehyde, acetaldehyde, propionaldehyde, acrolein, formic acid, acetic acid, propionic acid, the absorption solvent, the azeotropic solvent, the extraction solvent, water, propionic acid, crotonic acid, benzaldehyde, furfural, protoanemonin, benzoic acid, maleic anhydride, phenol, β-hydroxypropionic acid, β-acryloxypropionic acid, and a polymerization inhibitor.

Impurities usually contained in several tens mass ppm or more in high purity acrylic acid such as water, acetic acid, propionic acid, and a polymerization inhibitor (hydroquinone monomethyl ether) can be determined quantitatively through a usual quantitative analysis and need not be analyzed quantitatively through the method of the present invention. However, the present invention can be applied to all impurities in high purity acrylic acid when the impurities are contained in a content of several ppm or less. The present invention is more preferably applied to impurities such as furfural, benzaldehyde, and protoanemonin affecting polymerizability of acrylic acid even at a level of several ppm.

### <Crystallization and separation>

In the present invention, acrylic acid is crystallized from liquid acrylic acid (high purity acrylic acid) in a certain ratio. By cooling high purity acrylic acid to a freezing point or lower, high purity acrylic acid is crystallized into a higher purity solid and impurities are concentrated in a mother liquor after acrylic acid is crystallized. A method of crystallizing acrylic acid from high purity acrylic acid is not limited to any method, but a method comprising: weighing a predetermined amount of high purity acrylic acid in a sample vessel and leaving the vessel at stand in an ice bath for a predetermined time period for crystallization; is simple and preferable.

Meanwhile, high purity acrylic acid refers to liquid acrylic acid containing acrylic acid in a concentration of 98 mass% or more and, when the above-mentioned impurities are contained, impurities each in a concentration of several ppb to about several hundreds ppm.

A ratio of a solid to be crystallized varies depending on a crystallization temperature or time; a sample amount; a volume of a vessel, material, form, or thickness; a sample purity; or the like. In the present invention, a ratio of a mass of solid acrylic acid to be crystallized to a mass of high purity acrylic acid (that is, the "certain ratio") is arbitrary so long as the ratio allows crystallization of solid acrylic acid from high purity acrylic acid, but is preferably in the range of 70.0 mass% to 99.5 mass%. A ratio of a solid to be crystallized of more than 99. 5 mass% is not preferable because an error in the method of the present invention may increase. On the other hand, a ratio of a solid to be crystallized of less than 70.0 mass% is not preferable because the impurities may not be sufficiently concentrated into the mother liquor.

In the present invention, a mass of the mother liquor after acrylic acid is crystallized is measured. The crystallized solid and the remaining mother liquor may be separated through any method, but decantation is the simplest and preferable. A mass of the mother liquor is determined by separating the crystallized solid and the mother liquor and by measuring the mass of the mother liquor. In addition, a mass of the mother liquor may be determined by measuring a mass of the crystallized solid and subtracting the mass of the solid from a mass of high purity acrylic acid.

### <Quantitative analysis method>

In the present invention, an impurity in a mother liquor is quantitatively determined. In the present invention, a device for quantitative analysis of the impurity is not limited to any analyzer so long as the device is for analyzing normal-grade acrylic acid such as gas chromatography or liquid chromatography. Gas chromatography is preferably used from the viewpoints of cost, operability, and the like. A method for analyzing is not limited to any method, but a device and conditions are preferably the same as those used for analysis of normal-grade acrylic acid from the viewpoints of multiusability, maintenance, operability, and the like.

An analysis target sample in the present invention is a liquid excluding a solid after crystallization of high purity acrylic acid, that is, a mother liquor. An absolute calibration method, an inner standard method, or the like can be used as a method for quantifying an amount of an impurity in the mother liquor.

In the present invention, an amount of an impurity in high purity acrylic acid is determined based on the determined amount of the impurity in the mother liquor and a ratio of the impurity distributed to a mother liquor and a crystallized solid (the ratio is also referred to as "distribution factor") when acrylic acid is crystallized in a certain ratio. The determined amount of the impurity in the mother liquor and the amount of the impurity to be determined may be in mass or in concentration. A method of converting a result of quantitative determination of the mother liquor to a concentration in high purity acrylic acid of the sample is not limited to any method. However, a calibration curve prepared based on the determined distribution factor of each of the impurities to the solid acrylic acid and to the mother liquor in crystallization is preferably used.

The calibration curve is preferably a graph showing that a concentration of each of the impurities in the mother liquor corresponds to how many fold the concentration of each of the impurities in the high acrylic acid as an original sample when a ratio of the crystallized solid acrylic acid is in a specific range of 70 mass% to 99.5 mass%, for example, from the viewpoint of quantitatively determining an impurity in high purity acrylic acid easily.

Such a calibration curve can be prepared by, for example: measuring masses of solid acrylic acid and mother liquor obtained through crystallization of an arbitrary amount of high purity acrylic acid in a certain ratio (a ratio within 70.0 mass% to 99.5 mass%, for example); quantitatively determining a mass of an impurity in the obtained solid acrylic acid and a mass of an impurity in the obtained mother liquor; determining a concentration of impurities in the high purity acrylic acid from the determined total mass of the impurities and the mass of the high purity acrylic acid; determining a concentration of the impurity in the mother liquor from the mass of the mother liquor and the mass of the impurity in the mother liquor; determining a magnification of a concentration of the impurity in the mother liquor with respect to a concentration of the impurity in the high purity acrylic acid; and plotting with the magnification of the concentration as an vertical axis and the ratio in the time when the solid acrylic acid was crystallized from the high purity acrylic acid as an horizontal axis. The mass of the impurity in the solid acrylic acid or the mother liquor can be measured through the above-mentioned analysis method using a special column or analysis method under special conditions, the above-mentioned absolute calibration method or inner standard method.

### <Determination limit>

A concentration of the impurity in high purity acrylic acid quantitatively determined in the present invention is preferably 0.1 mass ppm or more from the viewpoint of allowing highly accurate analysis by suppressing an increase in a determination error. When an actual concentration of an impurity is 0.1 mass ppm and 99.5% of high purity acrylic acid is solidified through crystallization, the impurity can be concentrated by 50 to 100 fold in the mother liquor and a concentration thereof in the mother liquor becomes 5 to 10 mass ppm. Thus, highly accurate analysis can be attained. However, in this case, an amount of the mother liquor is small and an error increases due to a fluctuation in an amount of the mother liquor adhered to a vessel wall or the like in a simple decantation method. An increase in an amount of a high purity acrylic acid sample suppresses such an error, but simplicity of the operation may be lost resulting from an increased amount of the sample required for crystallization and a longer crystallization time. Thus, a detection limit of 0.1 mass ppm is preferable in the present invention from the viewpoint of a simple method.

According to the present invention, such very high quality acrylic acid can be analyzed accurately and simply. Thus, the present invention can be suitably used for quality control of acrylic acid in a field requiring very high quality acrylic acid as in production of super absorbent polymers or the like.

### Examples

Hereinafter, the present invention will be more specifically described based on examples and comparative examples.

### <Example 1>

20 ml of a sample of liquid high purity acrylic acid was weighed (20.99 g) and sampled into a 50-ml flat-bottomed glass test tube, and the whole was immersed in an ice bath for 15 minutes. Next, in the ice bath, a solid crystallized in the test tube was compressed at a bottom part of the test tube using a glass rod having a rounded flat tip. Then, a mother liquor remained in an upper part was sampled through decantation and weighed (2.02 g).

Next, the sampled mother liquor was analyzed by gas chromatography. GC-14A (manufactured by from Shimadzu Corporation), which is usually used for analysis of normal-grade acrylic acid, was used for gas chromatography. A column having a diameter of 3 mm and a length of 1.5 m was used as a separation column. Column packing used was 15% FFAP (Free Fatty Acid Phase, available from GL Science Ltd.) and 5% NPGA (Neopentyl Glycol Adipate, available from GL Science Ltd.) carried on UNIPORT S (80 to 100 mesh). A temperature of column chamber was increased at a rate of 1° C/min from 120° C to 145° C and at a rate of 20° C/min from 145°C to 175°C. Temperatures of a sample injection port and a detector were 200° C, and nitrogen was used as a carrier gas at a flow rate of 50 ml/min. FID was used as the detector, and 0.2 mg of dimethyl sebacate as an internal standard substance was used with respect to 100 ml of the sample. Benzaldehyde in the mother liquor was quantitatively determined under the above-mentioned conditions.

A measured value of benzaldehyde in the mother liquor was 8 mass ppm. A ratio of a solid to the sample was 90.4 mass% ({100 x (20.99 g - 2.02 g) / 20.99 g)). A magnification of a concentration of benzaldehyde in the mother liquor with respect to a concentration of benzaldehyde in the sample was 9.6 from the calibration curve. A concentration of benzaldehyde in the sample of high purity acrylic acid calculated from the magnification was 0.8 mass ppm.

### <Comparative Example 1>

The same sample of high purity acrylic acid was directly analyzed using the same gas chromatography and under the same analysis conditions as those of Example 1. As a result, a peak of benzaldehyde could not be clearly observed. That is, a concentration of benzaldehyde in the sample of high purity acrylic acid was 5 mass ppm, which is a detection limit, or less, and was judged 0 mass ppm as a result of the measurement.

### Industrial Applicability

The method for quantifying of the present invention enables a simple and more highly accurate quantitative analysis of a trace amount of impurities in high purity acrylic acid using a general-purpose analyzer and analysis conditions.

## Claims

1. A method for quantifying an amount of an impurity in acrylic acid, comprising:
a crystallization step for obtaining a crystallized acrylic acid product and a mother liquor from liquid acrylic acid;
a step of quantitatively determining one of impurities in the mother liquor; and
a step of determining an amount of the impurity in the liquid acrylic acid based on the determined amount of the impurity in the mother liquor and a ratio of impurity distributed to a mother liquor and to crystallized solid acrylic acid when acrylic acid is crystallized in a certain ratio.

2. The method for quantifying an amount of an impurity in acrylic acid according to claim 1, wherein 70.0 mass% to 99.5 mass% of acrylic acid is crystallized with respect to a mass of the liquid acrylic acid in the crystallization step.

3. The method for quantifying an amount of an impurity in acrylic acid according to claim 1, wherein the one of impurities is quantitatively determined by using gas chromatography in the step of quantitatively determining. 4. The method for quantifying an amount of an impurity in acrylic acid according to claim 1, wherein a calibration curve prepared in advance is used in the step of determining an amount of the impurity.
